# EUROPÄISCHE PATENTSCHRIFT

(11) **EP 0 489 826 B1**
(45) Veröffentlichungstag und Bekanntmachung des Hinweises auf die Patenterteilung: **17.01.1996**
(21) Anmeldenummer: 90913399.3
(22) Anmeldetag: 29.08.1990
(51) Int. Cl.: G01N 27/12

(54) **VERWENDUNG EINES QUELLFÄHIGEN KUNSTSTOFFES, SOWIE VERFAHREN ZUR HERSTELLUNG EINES RESISTIVEN FEUCHTIGKEITSSENSORS**
USE OF A SWELLABLE PLASTIC AND PROCESS FOR MAKING A RESISTIVE MOISTURE SENSOR
UTILISATION D'UNE MATIERE PLASTIQUE SUSCEPTIBLE DE GONFLEMENT, AINSI QUE PROCEDE POUR LA FABRICATION D'UN CAPTEUR D'HUMIDITE RESISTIF

(30) Priorität: 29.08.1989 AT 2033/89; 09.03.1990 AT 571/90
(43) Veröffentlichungstag der Anmeldung: 17.06.1992
(73) Patentinhaber: E + E ELEKTRONIK GESELLSCHAFT M.B.H., A-4210 Engerwitzdorf (AT); LENZING AKTIENGESELLSCHAFT, A-4860 Lenzing (AT)
(72) Erfinder: MITTER, Helmut, A-4202 Hellmansödt (AT); SCHARIZER, Walter, A-4210 Gallneukirchen (AT); SÖLLRADL, Herbert, D-8261 Emmerting (DE); ROSSAK, Norbert, A-4872 Neukirchen a.d. Vöckla (AT)
(74) Vertreter: Haffner, Thomas M., Dr.
(86) Internationale Anmeldenummer: AT9000084
(87) Internationale Veröffentlichungsnummer: WO9103734

(56) Entgegenhaltungen:
- GB-A- 1 464 605
- US-A- 3 582 728
- US-A- 3 848 218
- US-A- 4 761 710

## Beschreibung

Die Erfindung bezieht sich auf die Verwendung eines quellfähigen Kunststoffes, in welchem zur Verbesserung der Leitfähigkeit Zusätze, wie Kohlenstoff, z.B. Ruß, Metallstaub od.dgl., dispergiert sind, zur Herstellung eines resistiven Feuchtigkeitssensors, sowie ein Verfahren zur Herstellung eines derartigen resistiven Feuchtigkeitssensors.

Resistive Feuchtigkeitssensoren, d.h. Feuchtesensoren, die einen elektrischen Widerstand in Abhängigkeit von der Luftfeuchtigkeit ändern, sind mit Metall- oder Halbleiteroxiden als feuchtigkeitsempfindlichem Material bekannt. Die genannten feuchtigkeitsempfindlichen Materialien kommen hauptsächlich in Form von Sinterkörpern, Keramik, Folien, gebrannten Dickschichtpasten und chemisch abgeschiedenen Belägen zur Anwendung. Derartige Feuchtigkeitssensoren zeichnen sich in den genannten Ausführungsformen durch hohe Empfindlichkeit, d.h. hohe Widerstandsänderung bei Änderung der Feuchtigkeit aus, sind aber nur in geringem Ausmaß stabil und weisen ein relativ träges Ansprechverhalten und insbesondere lange Ansprechzeiten auf. Da das feuchtigkeitsaufnehmende Volumen derartiger Sensoren verhältnismäßig groß ist, läßt sich die träge Ansprechcharakteristik verstehen.

Metall- oder Halbleiteroxid-Feuchtigkeitssensoren weisen darüberhinaus im allgemeinen eine stark nicht-lineare Widerstands-Feuchtigkeits-Charakteristik sowie relativ große Widerstände auf, was den Aufwand in der Auswerteelektronik erhöht. Sensoren der eingangs genannten Art sind beispielsweise aus der DE-PS 16 98 096, DE-OS 27 28 092, der DE-OS 30 24 297, der US-PS 3 453 143 und der DE-AS 29 38 434 zu entnehmen.

Die Erfindung zielt nun darauf ab, einen resistiven Feuchtesensor zur Verfügung zu stellen, welcher in einfacher Weise herstellbar ist und sich durch gute Linearität der Widerstands-Feuchte-Charakteristik, sowie ein für die Auswertung besonders geeignetes Widerstandsniveau auszeichnet. Erfindungsgemäß wird hiezu vorgeschlagen, einen quellfähigen Kunststoff, in welchem zur Verbesserung der Leitfähigkeit Zusätze wie Kohlenstoff, Metallstaub od.dgl., dispergiert sind, zur Herstellung eines resistiven Feuchtigkeitssensors zu verwenden. Quellfähige Kunststoffe, wie beispielsweise Polyimide, sind im Zusammenhang mit kapazitiven Feuchtigkeitssensoren bereits vorgeschlagen worden. Daß sich quellfähige Kunststoffe mit entsprechenden, die Leitfähigkeit erhöhenden Zusätzen für die Herstellung von resistiven Feuchtigkeitssensoren eignen, lag in keiner Weise nahe. Der Mechanismus für die Funktion eines derartigen quellfähigen Kunststoffes als Matrix für die Leitfähigkeit erhöhende Zusätze zur Herstellung eines resistiven Feuchtigkeitssensors ist keineswegs vollständig geklärt. Die überraschend als relativ linear beobachtete Widerstands-Feuchtigkeits-Charakteristik wird darauf zurückgeführt, daß durch das Quellen des quellfähigen Kunststoffes bei zunehmender Feuchtigkeit der relative Abstand der die Leitfähigkeit erhöhenden Zusätze vergrößert wird, so daß eine positive Widerstandsänderung mit steigender Feuchte beobachtet wird. Die Verwendung einer Polymermatrix aus quellfähigem Kunststoff hat hiebei den Vorteil, daß mit relativ dünnen Schichten gearbeitet werden kann, wodurch die Ansprechgeschwindigkeit wesentlich gesteigert werden kann, wobei die Tatsache, daß die Grundleitfähigkeit durch Zusätze, wie Kohlenstoff, z.B. Ruß, Metallstaub od.dgl., erzielt wird, die Möglichkeit bietet, resistive Feuchtigkeitssensoren mit für nachgeschaltete Auswerteelektroniken günstigen Widerstandswerten zu erzeugen, wobei der Widerstandswert in weiten Grenzen einstellbar ist. Uberraschend ist vor allem neben der im wesentlichen linearen positiven Widerstandscharakteristik die hohe Ansprechgeschwindigkeit, welche eine deutliche Verbesserung bei besonders einfacher Herstellung des Feuchtigkeitssensors mit sich bringt. Mit Vorteil werden für die Herstellung derartiger resistiver Feuchtigkeitssensoren als quellfähiger Kunststoff Polyimide, Copolyimide, Aramide, Polyamide, Polyacrylate, Polymethacrylate, Polycarbonate, Polysulfone oder Polyethylen eingesetzt, wobei in bevorzugter Weise als Leitfähigkeitszusätze bis zu 50 Gew.-% Graphit oder 3 bis 15 Gew.-% Ruß mit einer spezifischen Oberfläche von mehr als 100 m/g, insbesondere etwa 1000 m/g eingesetzt werden. Ein hohes Maß an Stabilität und eine hohe Linearität der Widerstands-Feuchtigkeitscharakteristik läßt sich dadurch erzielen, daß die Leitfähigkeitszusätze mit Dispergiermitteln, wie z.B. Siloxanen, eingebracht werden und eine maximale Teilchengröße von 25 µm aufweisen.

Prinzipiell kann ein derartiger quellfähiger Kunststoff in konventioneller Weise auf ein entsprechendes isolierendes Trägermaterial aufgebracht werden, um die mechanische Stabilität sicherzustellen. Die Sensormasse kann hiebei nach dem homogenen Einbringen von Leitfähigkeitszusätzen durch Schleudern, Tauchen oder Sprühen oder auch Streichen, Drücken od.dgl. aufgebracht werden, wobei insbesondere im Falle der bevorzugten Verwendung von Polyimiden als quellfähigem Kunststoff ein besonders vorteilhaftes Verfahren zur Herstellung eines derartigen resistiven Feuchtigkeitssensors im wesentlichen darin besteht, daß quellfähige Kunststoffe, insbesondere Polyimide und/oder Copolyimide in einem polaren Lösungsmittel, wie z.B. N-Methylpyrrolidon, gelöst werden, daß hierauf Leitfähigkeitszusätze, wie z.B. Ruß, in der Lösung dispergiert und homogen verteilt werden, und daß anschließend die Lösung auf einen inerten Träger aufgebracht wird und anschließend getrocknet wird. Für die Lösung von Polyimiden und/oder Copolyimiden in polaren Lösungsmitteln können hiebei auch bereits vollständig imidisierte Materialien Verwendung finden, wodurch sich besonders homogene und entsprechend dünne Schichten mit entsprechend großer Ansprechgeschwindigkeit erzielen lassen. Die Verwendung polarer Lösungsmittel, welche durch Trocknen entfernt werden können, erlaubt es in einfacher Weise, homogene und dünne Schichten aus quellfähigen Kunststoffen mit den zuvor eingebrachten, die Leitfähigkeit erhöhenden Zusätzen auf einen mechanisch stabilen, inerten Träger aufzubringen. Als isolierendes Trägermaterial kann hiebei in konventioneller Weise Glas, Keramik, oxidierte Silizium-Wafer od.dgl., eingesetzt werden, wobei die Verwendung von Polyimiden in vollständig imidisiertem Zustand in einem polaren Lösungsmittel beliebige Schichtstärken mit vollständiger Homogenität erzielen läßt, da beim nachfolgenden Entfernen, insbesondere Abdampfen des Lösungsmittels, keine chemische Reaktion in der Beschichtung abläuft und dadurch die Gefahr der Ausbildung von Inhomogenitäten in der Oberfläche vermieden wird. Auf diese Weise lassen sich auch bei extrem kleinen Schichtstärken reproduzierbare Widerstandswerte einstellen. Mit Vorteil wird erfindungsgemäß für die Trocknung so vorgegangen, daß die Trocknung in wenigstens zwei Stufen vorgenommen wird, wobei in der ersten Stufe bei Temperaturen zwischen 80° und 140°C, insbesondere 120°C, und in jeder weiteren Stufe bei einer um 50 bis 80°C erhöhten Temperatur getrocknet wird, wodurch eine homogene und glatte Oberfläche erzielt wird, welche ein reproduzierbares Ansprechverhalten bei im wesentlichen gleichbleibender Grundeinstellung des Widerstandswertes erzielen läßt. Im Falle von resistiven Feuchtigkeitssensoren entfällt die für kapazitive Sensoren erforderliche, feuchtigkeitsdurchlässige Deckelektrode, so daß vergleichsweise besonders kurze Ansprechzeiten möglich werden. Als polares Lösungsmittel kann im Falle von Polyimiden mit Vorteil Dimethylformamid, Dimethylacetamid, Dimethylsulfoxid, N-Methylpyrrolidon oder Sulfolan verwendet werden, wobei eine vollständige Lösung in einem derartigen polaren Lösungsmittel dann sichergestellt werden kann, wenn als Polyimid ein Copolymeres aus 3,3',4,4'- -Benzophenontetracarbonsäuredianhydrid und 60 bis 100 Mol.% Toluylendiamin (2,4- und/oder 2,6-Isomeres) oder Toluylendiisocyanat (2,4- und/oder 2,6-Isomeres) und 0 bis 40 % Mol.% 4,4-Methylenbis(phenylamin) oder 4,4'-Methylenbis-(phenylisocyanat) und insbesondere ein lineares Polyimid mit einem Gewichtsmittel von 30000 bis 300000 Einheiten und einem Zahlenmittel von 10000 bis 60000 eingesetzt wird. Ein derartiges lineares Polyimid kann aus der Lösung durch Tauchen, Sprühen oder Schleudern aufgebracht werden und es wird auf diese Weise sichergestellt, daß die aufgebrachte Schicht über die gesamte Fläche gleichmäßig dick und pinholefrei ist, wobei die Schichten mit bedeutend geringerer Dicke aufgebracht werden können, was insbesondere im Hinblick auf die Ansprechgeschwindigkeit von besonderer Bedeutung ist.

Als lineares Polyimid mit besonders hoher Empfindlichkeit und gegenüber herkömmlichen Polyimidfilmen verbessertem Ansprechverhalten wurde ein Copolymer aus 3,3',4,4'-Benzophenontetracarbonsäuredianhydrid und 60 bis 100 Mol.% Toluylendiamin (2,4- und/oder 2,6-Isomeres) oder Toluylendiisocyanat (2,4- und/oder 2,6-Isomeres) und 0 bis 40 % Mol.% 4,4-Methylenbis(phenylamin) oder 4,4'-Methylenbis-(phenylisocyanat) aufgefunden. Die Verwendung eines derartigen Copolymers, insbesondere eines derartigen statistischen Copolymers mit einem Gewichtsmittel von 30000 bis 300000 Einheiten und einem Zahlenmittel von 10000 bis 60000 Einheiten, zeichnet sich dadurch aus, daß es in den oben genannten stark polaren Lösungsmitteln ohne weiteres löslich ist, wobei die Haftung und insbesondere die Gefahr eines Verrutschens oder Ablösens der nach dem Trocknen ausgebildeten Polyimidschicht vom Trägermaterial mit Sicherheit dadurch verhindert werden kann, daß vor dem Auftragen der Polyimidschicht ein Haftvermittler, insbesondere organofunktionelle Silane mit einer oder mehreren funktionellen Endgruppen (so z.B. Aminopropyltriethoxysilan, Aminoethylaminopropyltrimethoxysilan oder 3-Glycidoxypropyltriethoxysilan etc.), aufgebracht wird. Derartige organofunktionelle Silane sind einfach verarbeitbar und zeigen zu üblicherweise verwendeten Trägermaterialien, wie Glas, Keramik, Metall od.dgl., ebenso wie zu den für die Herstellung der feuchtigkeitsempfindlichen Schicht verwendeten linearen löslichen Polyimiden eine große Affinität. Durch die gute Löslichkeit derartiger organofunktioneller Silane sowohl in wässrigen als auch nicht wässrigen Lösungsmitteln lassen sich insbesondere durch Tauchen, Sprühen oder Schleudern extrem dünne Schichten des Haftvermittlers auf dem Trägermaterial aufbringen, so daß die Gesamtdicke des Sensors durch den Haftvermittler nur unwesentlich vergrößert wird.

Die vollständige Entfernung des polaren Lösungsmittels in mehreren Stufen in den angeführten Temperaturbereichen ergibt eine dünne, homogene Polyimidschicht auf dem Träger und eine gleichmäßige Durchtrocknung des Polyimids über die gesamte Fläche und Tiefe des Bauteiles. Gleichzeitig wird mit einer derartigen Temperaturbehandlung überraschenderweise eine weitere Linearisierung der Widerstands-Feuchtigkeits-Charakteristik erzielt, wobei mit Vorteil die maximale Trocknungstemperatur kleiner 280°C, vorzugsweise mit etwa 260°C, gewählt wird.

Um den Aufwand für die nachfolgende Auswerteschaltung gering zu halten, wird mit Vorteil der spezifische Widerstand des leitfähigen, quellfähigen Kunststoffes auf 0,5 Ωcm bis 50 kΩcm, insbesondere 5 Ωcm bis 30 kΩcm eingestellt.

Nach der auf diese Weise vorgenommenen Konditionierung des Polymers durch Trocknung, Erstarrung bzw. gegebenenfalls Ausheilung können die zuvor am Träger vorgesehenen Anschlußkontakte mechanisch, mittels Laser oder durch Plasmaätzen freigelegt werden und der Sensor mit Anschlußdrähten kontaktiert werden.

Die Aufbringung der Polymermatrix kann hiebei unmittelbar auf den Träger oder gegebenenfalls unter Zwischenschaltung eines Haftvermittlers erfolgen, wobei für resistive Sensoren die Elektrodenstruktur auch anschließend über das Polymer durch Aufdampfen oder Sputtern hergestellt werden kann und gegebenenfalls photolithographisch strukturiert werden kann. Bei einer derartigen Ausführung müssen die Anschlußkontakte nicht mehr vom Polymer befreit werden, so daß die Strukturierung des Polymers entfallen kann.

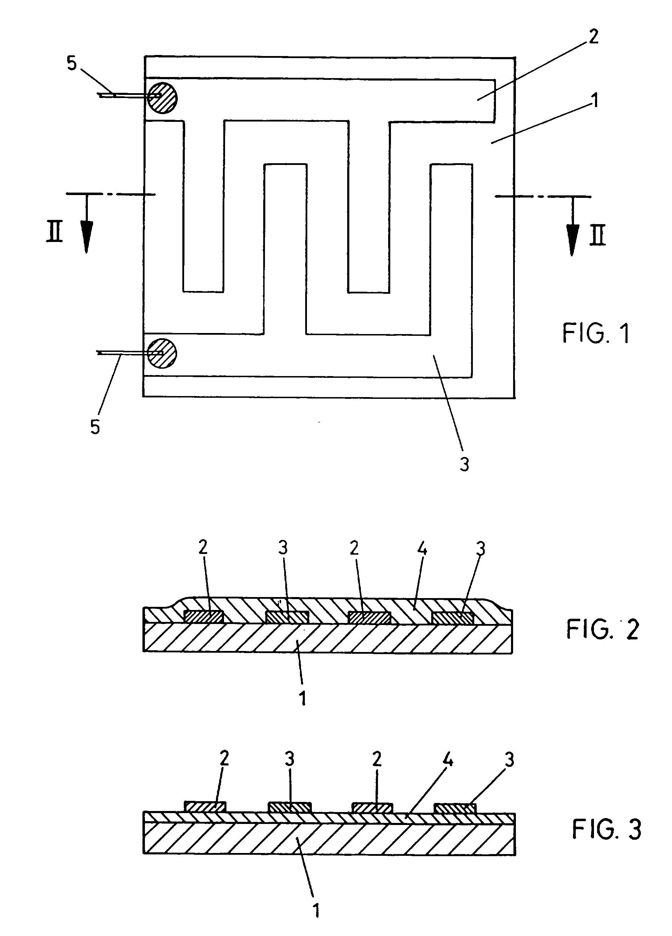

Die Erfindung wird nachfolgend an Hand von in der Zeichnung schematisch dargestellten Ausführungsbeispielen näher erläutert. In dieser zeigen: Fig.1 eine Draufsicht auf eine erste Ausbildungsform eines erfindungsgemäßen Feuchtesensors; Fig.2 einen Schnitt nach der Linie II-II durch den Sensor der Fig.1, und Fig.3 eine abgewandelte Ausführungsform in einer zu Fig.2 analogen Darstellung.

In Fig.1, 2 und 3 ist mit 1 ein isolierender Träger bezeichnet, welcher beispielsweise aus Glas, Keramik, oxidiertem Silizium-Wafer oder anderen elektrisch isolierenden organischen oder anorganischen Trägermaterialien bestehen kann. Auf den gereinigten und getrockneten Träger 1 werden mittels eines Kathoden-Zerstäubungsverfahrens in einem Prozeß zuerst eine Schicht NiCr mit einer Stärke von 200 nm und anschließend eine Schicht Au mit einer Schichtstärke von 150 nm aufgebracht. Diese NiCr-Au-Schicht wird daran anschließend in Form von ineinandergreifenden Kammelektroden 2 und 3 photolithographisch strukturiert.

Auf die gereinigte und getrocknete, gegebenenfalls mit einem Haftvermittler behandelte Oberfläche des mit den Elektroden 2 und 3 versehenen Substrats bzw. Trägers wird die Lösung eines im voll imidisierten Zustand noch in polaren Lösungsmitteln löslichen Polyimids oder Copolyimids aufgebracht, welches durch Zugabe von etwa 6% Ruß, bezogen auf den Polyimidanteil in der Lösung leitfähig gemacht wurde und anschließend getrocknet.

Die dünne Polymerschicht 4 wird anschließend über den Anschlußflächen der Elektrode entweder mechanisch oder durch Plasmaätzen oder mittels Laser.entfernt, um ein Kontaktieren der Elektroden 2, 3 mit Anschlußdrähten 5 zu ermöglichen.

Für die durch Zusatz von Ruß oder Graphit leitfähig gemachte Polyimidschicht 4 wird ein lineares Copolymer aus 3,3',4,4'- -Benzophenontetracarbonsäuredianhydrid und 60 bis 100 Mol.% Toluylendiamin (2,4- und/oder 2,6-Isomeres) oder Toluylendiisocyanat (2,4- und/oder 2,6-Isomeres) und 0 bis 40 % Mol.% 4,4'-Methylenbis(phenylamin) oder 4,4'-Methylenbis-(phenylisocyanat) in einem stark polaren Lösungsmittel wie beispielsweise Dimethylformamid, Dimethylacetamid, Dimethylsulfoxid, N-Methylpyrrolidon oder Sulfolan eingesetzt. Nach dem Aufbringen eines derartigen statistischen Copolymers mit einem Gewichtsmittel von 30000 bis 300000 Einheiten und einem Zahlenmittel von 10000 bis 60000 wurde das Polyimid bei Temperaturen von über 105°C bis maximal 280°C ansteigend getrocknet, wobei in drei Stufen getrocknet wurde und in jeder der drei Stufen die Temperatur gegenüber der zuvor herrschenden Temperatur um jeweils 50 bis 80°C erhöht wurde. Die Trocknung erfolgte beispielsweise bei 120°C, 190°C und 260°C.Das lineare Polyimid wurde aus der Lösung durch Tauchen, Sprühen oder Schleudern aufgebracht. Prinzipiell ist die Verarbeitung des linearen statistischen Copolyimids für die Herstellung der Polyimidschicht 4 direkt aus der bei der Polykondensation erhaltenen Lösung möglich. Ebenso kann aber das Polyimid zuvor ausgefällt, getrocknet und gelagert werden und erst bei Bedarf eine geeignete Lösung hergestellt werden.

Bei der Ausführungsform gemäß Fig.3 wird auf die gereinigte und getrocknete, gegebenenfalls mit einem Haftvermittler behandelte Oberfläche des Substrats bzw. Trägers 1 die mit Ruß bzw. Graphit leitfähig gemachte Lösung des Polyimids wiederum durch Schleudern aufgebracht und in einem Umluftofen in drei Stufen bei etwa 120°C, 190°C und 260°C getrocknet.

Auf die so hergestellte leitfähige, dünne Polyimidschicht 4 wird nachfolgend mittels eines Zerstäubungsverfahrens in einem Prozeß zuerst eine Schicht NiCr mit einer Stärke von 200 nm und anschließend eine Schicht Au mit einer Schichtstärke von 150 nm aufgebracht. Diese NiCr-Au-Schicht wird nachfolgend ebenfalls in Form von ineinandergreifenden Kammelektroden 2, 3 photolithographisch strukturiert und mit Anschlußdrähten kontaktiert.

Besonders geringe Schichtstärken und damit hohe Ansprechgeschwindigkeit sind durch Schleudern und Drücken erhältlich, wobei ein Dickenbereich von 0,3 µm bis 10 µm, vorzugsweise 0,5 µm bis 2 µm, in Betracht kommt.

## Patentansprüche

1. Verwendung eines quellfähigen Kunststoffes, in welchem zur Verbesserung der Leitfähigkeit Zusätze, wie Kohlenstoff oder Metallstaub, dispergiert sind, zur Herstellung eines resistiven Feuchtigkeitssensors, dadurch gekennzeichnet, daß als quellfähiger Kunststoff Polyimide und/oder Copolyimide eingesetzt werden.

2. Verwendung nach Anspruch 1, dadurch gekennzeichnet, daß als Leitfähigkeitszusätze bis zu 50 Gew.-% Graphit oder 3 bis 15 Gew.-% Ruß mit einer spezifischen Oberfläche von mehr als 100 m/g eingesetzt werden.

3. Verwendung nach Anspruch 2, dadurch gekennzeichnet, daß Leitfähigkeitszusätze mit einer spezifischen Oberfläche von 1000 m/g eingesetzt werden.

4. Verwendung nach Anspruch 1, 2 oder 3, dadurch gekennzeichnet, daß die Leitfähigkeitszusätze mit Dispergiermitteln, wie Siloxanen, eingebracht werden und eine maximale Teilchengröße von 25 µm aufweisen.

5. Verfahren zur Herstellung eines resistiven Feuchtigkeitssensors, wobei Polyimide aus Dianhydriden oder Isocyanaten in einem Lösungsmittel, wie N-Methylpyrrolidon, gelöst werden, worauf Leitfähigkeitszusätze, wie Ruß, in der Lösung dispergiert und homogen verteilt werden, und wobei anschließend die Lösung auf einen inerten Träger (1) aufgebracht wird und anschließend getrocknet wird.

6. Verfahren nach Anspruch 5, dadurch gekennzeichnet, daß die Trocknung in wenigstens zwei Stufen vorgenommen wird, wobei in der ersten Stufe bei Temperaturen zwischen 80° und 140°C und in jeder weiteren Stufe bei einer um 50 bis 80°C erhöhten Temperatur getrocknet wird.

7. Verfahren nach Anspruch 6, dadurch gekennzeichnet, daß die Trocknung in der ersten Stufe bei einer Temperatur von 120°C vorgenommen wird.

8. Verfahren nach Anspruch 6 oder 7, dadurch gekennzeichnet, daß die maximale Trocknungstemperatur kleiner 280°C gewählt wird.

9. Verfahren nach Anspruch 8, dadurch gekennzeichnet, daß für die maximale Trocknungstemperatur 260°C gewählt wird.

10. Verfahren nach einem der Ansprüche 5 bis 9, dadurch gekennzeichnet, daß der spezifische Widerstand des leitfähigen, quellfähigen Kunststoffes auf 0,5 Ωcm bis 50 kΩcm eingestellt wird.

11. Verfahren nach Anspruch 10, dadurch gekennzeichnet, daß der spezifische Widerstand des leitfähigen, quellfähigen Kunststoffes auf 5 Ωcm bis 30 kΩcm eingestellt wird.

## Claims

1. The use of a swellable plastics in which additives, such as carbon or metal dust, have been dispersed to enhance conductivity, for the production of a resistive moisture sensor, characterized in that polyimides and/or copolyimides are used as said swellable plastics.

2. The use according to claim 1, characterized in that up to 50 % by weight of graphite or 3 to 15 % by weight of soot having a specific surface of more than 100 m/g are used as said conductivity additives.

3. The use according to claim 2, characterized in that conductivity additives having a specific surface of 1000 m/g are used.

4. The use according to claim 1, 2 or 3, characterized in that said conductivity additives are introduced along with dispergents, such as siloxanes, and have a maximum particle size of 25 µm.

5. A method of producing a resistive moisture sensor by dissolving polyimides of dianhydrides or isocyanates in a solvent, such as N-methyl pyrrolidone, whereupon conductivity additives, such as soot, are dispersed in the solution and are homogenously distributed, the solution subsequently being applied on an inert carrier (1) and dried afterwards.

6. A method according to claim 5, characterized in that drying is effected in at least two steps, drying being effected between 80° and 140°C in the first step and at a temperature raised by 50 to 80°C in any further step.

7. A method according to claim 6, characterized in that drying in the first step is effected at a temperature of 120°C.

8. A method according to claim 6 or 7, characterized in that the maximum drying temperature is chosen to be smaller than 280°C.

9. A method according to claim 8, characterized in that 260°C are chosen for the maximum drying temperature.

10. A method according to any one of claims 5 to 9, characterized in that the specific resistance of the conductive swellable plastics is adjusted to 0.5 Ωcm to 50 kΩcm.

11. A method according to claim 10, characterized in that the specific resistance of the conductive swellable plastics is adjusted to 5 Ωcm to 30 kΩcm.

## Revendications

1. Utilisation d'une matière plastique susceptible de gonflement, dans laquelle des additifs tels que du carbone ou de la poussière de métal sont dispersés pour améliorer la conductivité, en vue de la réalisation d'un capteur d'humidité résistif, caractérisée en ce que l'on utilise comme plastique susceptible de gonflement des polyimides et/ou des copolyimides.

2. Utilisation selon la revendication 1, caractérisée en ce que l'on utilise comme additifs de conductivité jusqu'à 50 % du poids de graphite ou 3 à 15 % du poids de suie avec une surface spécifique de plus de 100 m/g.

3. Utilisation selon la revendication 2, caractérisé en ce qu'on utilise des additifs de conductivité d'une surface spécifique de 1000 m/g.

4. Utilisation selon la revendication 1, 2 ou 3, caractérisée en ce que les additifs de conductivité sont utilisés avec des agents dispersants, tels que des siloxanes, et présentent une grosseur de particules maximale de 25 µm.

5. Procédé pour la fabrication d'un capteur d'humidité résistif, dans lequel des polyimides provenant de dianhydrides ou d'isocyanates sont dissous dans un solvant, tel que de la N-méthylpyrrolidone, après quoi des additifs de conductivité, tels que de la suie, sont dispersés dans la solution et répartis de façon homogène, et dans lequel la solution est ensuite appliquée sur un support (1) inerte puis séchée.

6. Procédé selon la revendication 5, caractérisé en ce que le séchage est réalisé en deux étapes au moins, le séchage ayant lieu à des températures comprises entre 80° et 140°C dans la première étape et à une température augmentée de 59 à 80°C dans chaque étape ultérieure.

7. Procédé selon la revendication 6, caractérisé en ce que le séchage est réalisé dans la première étape à une température de 120°C.

8. Procédé selon la revendication 6 ou 7, caractérisé en ce que la température de séchage maximale choisie est inférieure à 280°C.

9. Procédé selon la revendication 8, caractérisé en ce que la température maximale de séchage est fixée à 260°C.

10. Procédé selon l'une quelconque des revendications 5 à 9, caractérisé en ce que la résistance spécifique du plastique conducteur susceptible de gonflement est fixée entre 0, 5 Ωcm et 50 kΩcm.

11. Procédé selon la revendication 10, caractérisé en ce que la résistance spécifique du plastique conducteur susceptible de gonflement est fixée entre 0,5 Ωcm et 30 kΩcm.
